# NOUVEAU FASCICULE DE BREVET EUROPEEN

(11) **EP 0 211 764 B2**
(45) Date de publication et mention de la décision concernant l'opposition: **09.06.1993**
(45) Mention de la délivrance du brevet: 07.02.1990
(21) Numéro de dépôt: 86401724.9
(22) Date de dépôt: 01.08.1986
(51) Int. Cl.: H02M 3/335

(54) **Alimentation à découpage à fréquence fixe modulable**
Schaltnetzteil mit modulierbarer fester Frequenz
Switching power supply with modulated fixed frequency

(30) Priorité: 02.08.1985 FR 8511881
(43) Date de publication de la demande: 25.02.1987
(73) Titulaire: SOCIETE ELECTRONIQUE DE LA REGION PAYS DE LOIRE, F-75020 Paris (FR)
(72) Inventeur: Vrignaud, Jean-Claude, F-75008 Paris (FR); Louvel, Jean-Paul, F-75008 Paris (FR)
(74) Mandataire: Chaverneff, Vladimir

(56) Documents cités:
- FR-A- 2 535 538
- Consumer Integrated Circuits, Data Book, 1983, Thomson-EFCIS, pp. 577-580

## Description

La présente invention se rapporte à une alimentation à découpage à fréquence fixe modulable.

Une alimentation à découpage comporte, alimenté à partir de la tension secteur redressée, un oscillateur fournissant une tension en dents de scie et commandé par un circuit de commande de façon à faire varier soit sa fréquence, soit le rapport cyclique de son signal de sortie. Un tel circuit de commande pour alimentation à fréquence fixe existe sous forme de circuit intégré, par exemple le circuit TEA 2018 de THOMSON. Ce circuit est relié à un circuit extérieur à résistance et condensateur, alimenté en série par une tension continue fixe. La pente de la tension en dents de scie apparaissant aux bornes du condensateur est déterminée par les valeurs de la tension continue, de la résistance et du condensateur. Lorsque la tension de charge du condensateur atteint une valeur déterminée, un comparateur faisant partie du circuit de commande provoque le court-circuit du condensateur, et donc la décharge de la tension à ses bornes. La période du signal en dents de scie, à savoir le laps de temps séparant deux annulations successives de la tension aux bornes du condensateur, ne dépend donc que de la pente de la tension en dents de scie (partie correspondant à la charge du condensateur). Or cette pente dépend des valeurs de ladite tension continue et de la résistance. Ces valeurs étant fixes, la fréquence du signal de l'oscillateur est donc fixe.

Une telle alimentation à fréquence fixe a un fonctionnement correct, mais le transformateur qui coopère avec le transistor de découpage doit avoir un rapport de transformation relativement élevé pour permettre une bonne régulation en particulier si la tension secteur peut subir de fortes variations, ce qui entraîne l'apparition d'une tension élevée sur le collecteur du transistor de découpage au moment de son blocage.

On connaît d'après le document FR-A 2 535 538 un dispositif de protection pour transistor de découpage haute tension de montage redresseur. Le circuit d'asservissement du transistor comporte des moyens produisant un signal en dents de scie qui est asservi en fonction de la valeur de la charge du montage redresseur.

On connaît d'après la notice d'application de THOMSON-EFCIS, pages 577 à 580, et en particulier d'après le schéma de la page 580, un circuit d'alimentation à découpage utilisant le susdit circuit TEA 2018, mais la tension (+12V) alimentant la résistance du circuit Rₒ-Cₒ est stabilisée et ne peut donc influer sur l'oscillateur interne de ce circuit intégré.

La présente invention a pour objet une alimentation à découpage du type à fréquence fixe, permettant, avec des moyens simples, d'abaisser le rapport de transformation du transformateur coopérant avec le transistor de découpage, sans pour autant nuire à la qualité de la régulation amont et aval.

L'alimentation à découpage conforme à l'invention, du type à découpage à fréquence prédéterminée modulable, avec un circuit intégré comportant un oscillateur et constituant le circuit de commande du transistor de découpage de l'alimentation, cette alimentation comportant un circuit comprenant une résistance et un condensateur aux bornes duquel apparaît une tension en dents de scie, est caractérisée en ce que la résistance du circuit à résistance et condensateur relié à l'oscillateurdu circuit de commande du transistor de découpage est reliée à une borne recevant une tension au moins approximativement continue qui est fonction de la tension secteur alimentant l'alimentation à découpage. De façon avantageuse, ladite borne est reliée à la sortie d'un pont redresseur alimenté par ladite tension secteur.

La présente invention sera mieux comprise à la lecture de la description détaillée d'un mode de réalisation, puis comme exemple non limitatif, et illustré par le dessin annexé, sur lequel:
- la figure 1 est un schéma partiel d'une alimentation à découpage conforme à l'invention;
- la figure 2 est un chronogramme du signal collecteur, à la tension secteur minimale, et maximale, du transistor découpeur d'une alimentation de l'art antérieur, et
- la figure 3 est un chronogramme du signal collecteur, également à la tension secteur minimale, et maximale, du transistor découpeur d'une alimentation conforme à l'invention.

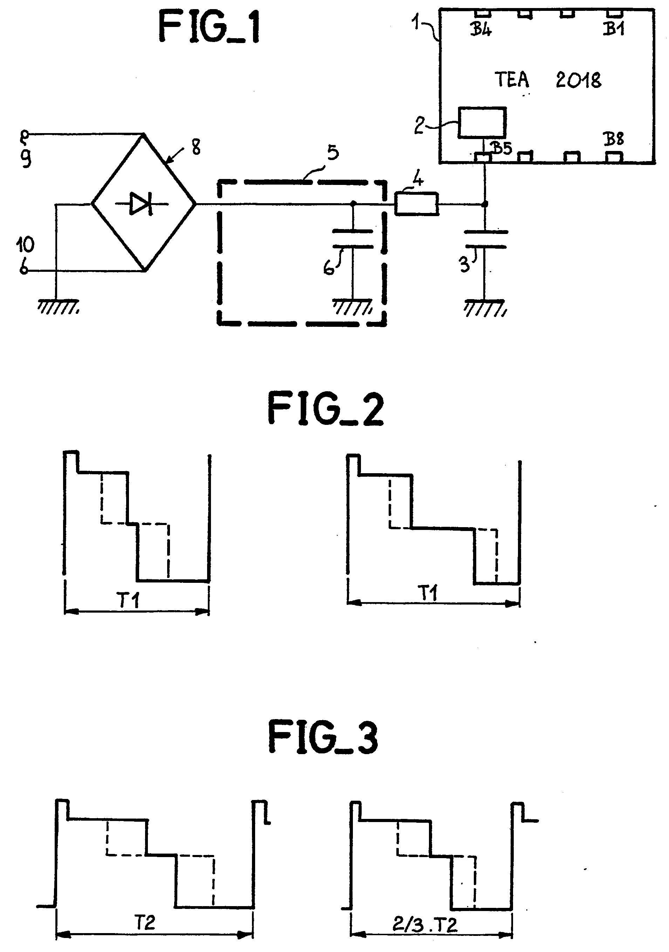

Sur le schéma de la figure 1, on a seulement représenté le circuit 1 de commande du transistor de découpage. Dans le cas présent, le circuit 1 est un circuit intégré THOMSON référencé TEA 2018, mais il est bien entendu que l'on pourrait utiliser tout circuit de commande équivalent, qu'il soit réalisé en circuit intégré, ou en composants discrets.

Le circuit TEA 2018 comporte huit broches B1 à B8. La broche B5 mise à part, toutes les autres broches du circuit TEA 2018 sont reliées de façon classique, comme préconisé par exemple dans la notice technique de ce circuit, aux autres composants de l'alimentation à découpage (non représentés). La broche B5 du circuit TEA 2018 qui est reliée intérieurement à un oscillateur 2, est reliée extérieurement à un condensateur 3 et à une résistance 4. Le condensateur 3 est relié à la masse. La résistance 4 est reliée par un condensateur 6 à la masse, et à la sortie d'un pont redresseur 8, dont les bornes d'entrée 9 et 10 sont alimentées par le secteur alternatif alimentant l'alimentation à découpage.

Sur les chronogrammes des figures 2 et 3, on a représenté en traits continus les courbes du signal collecteur du transistor de découpage (dont la base est reliée à la borne B1 du circuit TEA2018) pour une charge maximale de l'alimentation, c'est-à-dire lorsque cette alimentation fournit à sa charge le courant maximal permis. On a représenté en traits interrompus, sur les figures 2 et 3, ces courbes pour une charge minimale de l'alimentation. Les courbes de gauche des figures 2 et 3 correspondent à la tension secteur minimale pouvant se produire, et celles de droite correspondent à la tension secteur maximale. On définit le temps mort comme étant la différence entre la période du signal collecteur et la somme des durées de conduction primaire et secondaire du transformateur relié au transistor de découpage. Sur les courbes de figures 2 et 3, ce temps mort est le palier situé sensiblement à mi-amplitude.

On constate que, dans le cas du circuit de l'art antérieur (figure 2), le temps mort varie fortement lorsque la tension secteur varie, et qu'il est important lorsque cette tension secteur est maximale, la période T1 du signal ne variant pratiquement pas. Par contre, dans le circuit de l'invention, ce temps mort varie moins, et est moins long que celui du circuit de l'art antérieur pour une tension secteur maximale. Ceci est dû au fait que la fréquence de découpage, qui dépend de la tension alimentant le condensateur 3 via la résistance 4, est donc liée à l'amplitude de la tension secteur. La période T2 du signal pour une tension secteur minimale passe à environ 2/3 . T2 lorsque la tension secteur devient maximale.

Grâce au fait que l'on réduit ainsi le temps mort, on diminue les courants efficaces primaire et secondaire du transformateur de découpage, la valeur du courant efficace étant directement proportionnelle à la racine carrée du rapport cyclique. On peut ainsi diminuer le rapport de transformation du transformateur de décou page, ainsi que la surtension aux bornes de l'inductance de fuite de ce transformateur (puisque le courant collecteur du transistor découpeur diminue lorsque le temps de conduction augmente), ce qui permet de diminuer la tension maximale apparaissant sur le collecteur du transistor découpeur au moment de son blocage.

Ainsi, l'alimentation conforme à l'invention fonctionne avec un rapport cyclique variable en fonction de la charge, et à fréquence variable enfonction de la tension secteur (on peut malgré cela classer l'alimentation dans le type à fréquence fixe, car sa fréquence ne dépend pas de la charge, est fixe tant que la tension secteur est fixe, et fluctue autour d'une valeur nominale correspondant à la valeur nominale de la tension secteur).

Grâce aux circuits de l'invention, on obtient une bonne régulation de l'alimentation sur une très large plage de la tension secteur. Une tension secteurfaible provoque une diminution de la fréquence de fonctionnement, donc une augmentation possible du temps de conduction nécessaire au stockage de l'énergie demandée.

La diminution du temps mort, et ce, même dans le cas où l'alimentation fonctionne sur une large plage de la tension secteur, permet de diminuer la valeur des courants efficaces.

## Revendications

1. Alimentation à découpage à fréquence prédéterminée modulable, avec un circuit intégré comportant un oscillateur et constituant le circuit de commande du transistor de découpage de l'alimentation, cette alimentation comportant un circuit comprenant une résistance (4) et un condensateur (3) reliés en série, le point commun entre la résistance et le condensateur étant relié à la borne du circuit intégré sur laquelle apparaît une tension en dents de scie, cette borne étant reliée intérieurement à un oscillateur, ladite résistance (4) étant reliée à une borne recevant une tension au moins sensiblement continue, caractérisée en ce que la tension continue est uniquement fonction de la tension secteur.

2. Alimentation à découpage selon la revendication 1, caractérisée par le fait que ladite borne est reliée à la sortie d'un circuit de filtrage (5) de type passe-bas, relié à la sortie d'un pont redresseur (8) alimenté par ladite tension secteur.

## Patentansprüche

1. Schalt-Stromversorgung mit vorgegebener modulierbarer Frequenz, mit einem integrierten Schaltkreis, der einen Oszillator aufweist und den Steuerkreis des Schalttransistors der Stromversorgung darstellt, wobei diese Stromversorgung einen Kreis aufweist, der in Serie einen Widerstand (4) und einen Kondensator (3) enthält, wobei der gemeinsame Punkt zwischen dem Widerstand und dem Kondensator an die Klemme der integrierten Schaltung angeschlossen ist, an der eine Sägezahnspannung auftritt, wobei diese Klemme intern mit einem Oszillator verbunden ist, wobei der Widerstand (4) an eine Klemme angeschlossen ist, die eine Spannung empfängt, die zumindest im wesentlichen eine Gleichspannung ist, dadurch gekennzeichnet, daß die Gleichspannung ausschließlich von der Netzspannung abhängt.

2. Schalt-Stromversorgung nach Anspruch 1, dadurch gekennzeichnet, daß die Klemme mit dem Ausgang eines Filterkreises (5) vom Typ Tiefpaßfilter verbunden ist, der an den Ausgang einer Gleichrichterbrücke (8) angeschlossen ist, die von der Netzspannung gespeist wird.

## Claims

1. Switched-mode power supply having a predetermined frequency which can be modulated, with an integrated circuit including an oscillator and constituting the circuit for controlling the switching transistorofthe power supply, this powersup- ply including a circuit comprising a resistor (4) and a capacitor (3) which are connected in series, the common point between the resistor and the capacitor being connected to that terminal of the integrated circuit at which a sawtooth voltage appears, this terminal being connected internally to an oscillator, the said resistor (4) being connected to a terminal receiving an at least substantially direct-current voltage, characterised in that the direct-current voltage is solely a function of the mains voltage.

2. Switched-mode power supply according to Claim 1, characterised in that the said terminal is connected to the output of a filter circuit (5), of the low-pass type, connected to the output of a rectifier bridge (8) which is supplied by the said mains voltage.
